# EUROPÄISCHE PATENTSCHRIFT

(11) **EP 3 045 797 B1**
(45) Veröffentlichungstag und Bekanntmachung des Hinweises auf die Patenterteilung: **18.11.2020**
(21) Anmeldenummer: 16150507.8
(22) Anmeldetag: 08.01.2016
(51) Int. Cl.: F16L 37/52, F16L 51/00, F02M 35/10, F02B 33/44

(54) **GELENKANORDNUNG FÜR ROHRLEITUNGEN**
ARTICULATED ASSEMBLY FOR PIPELINES
AGENCEMENT D'ARTICULATION POUR DES CONDUITES

(30) Priorität: 19.01.2015 DE 102015000341
(43) Veröffentlichungstag der Anmeldung: 20.07.2016
(73) Patentinhaber: MANN + HUMMEL GMBH, 71636 Ludwigsburg (DE)
(72) Erfinder: EILERT, Lorenz, 38176 Wendeburg (DE); REGENER, Guido, 38321 Klein Denkte (DE); SINKEMAT, Stefan, 38667 Bad Harzburg (DE); HOMANN, Jörg, 38126 Braunschweig (DE); FISCHER, Udo, 38104 Braunschweig (DE); LACHUT, Robert, 38690 Vienenburg (DE)

(56) Entgegenhaltungen:
- EP-A1- 2 442 000
- CH-A- 273 783
- CH-A- 339 449
- CH-A- 367 363
- FR-A1- 2 622 671

## Beschreibung

### Technisches Gebiet

Die Erfindung betrifft eine Gelenkanordnung für Rohrleitungen, insbesondere zur Herstellung einer quasistarren Rohrverbindung.

### Stand der Technik

Aus der EP2286132 A1 ist eine Gelenkanordnung für Rohre bekannt, bei der eine Rohrmuffe ein männliches und ein weibliches Rohrteil verbindet. Die Rohrmuffe wirkt mit einer Innenkontur des weiblichen Rohrteils zusammen, um ein in der Rohraufnahme aufnehmbares Rohr gelenkig an das weibliche Rohrteil zu koppeln. Die Rohraufnahme weist dazu einen aus Abschnitten gebildeten Rohranschlag auf, die von einer Innenwand der Rohrmuffe abstehen.

Aus der CH 339 449 A ist eine Verbindungsanordnung bekannt, bei der eine Winkelposition zwischen einem Überwurfring und einem weiblichen Kupplungsteil dadurch begrenzt wird, dass zwei Rastnasen des Überwurfrings in entsprechenden Ausnehmungen des weiblichen Kupplungsteils eingreifen. Das männliche Kupplungsteil bzw. dessen kugelartigen Kopplungsabschnitt sind hierbei jedoch drehbar gegenüber dem Überwurfring, sodass auch in einem montierten Zustand eine Drehbarkeit zwischen den beiden Kupplungsteilen vorliegt.

Aus CH 273 783 A ist eine Verbindungsanordnung bekannt, die eine gewisse Winkelbeweglichkeit von zwei Anschlussstücken erlaubt; hierzu ist das Ende des einen Anschlussstückes kugelförmig ausgestaltet. Um eine axiale Fixierung der Verbindungsvorrichtung zu ermöglichen, sind an einem Anschlussstück Ausnehmungen vorgesehen, in die zwei am anderen Anschlussstück vorliegende Nocken D eingeführt werden können. Um die Verbindung zu sichern werden die beiden Anschlussstücke soweit gegeneinander verdreht, bis die Nocken in die Ausnehmungen hintergreifen.

Ferner beschreibt die CH 367 363 A eine Anordnung, durch die zwei Rohrenden miteinander verbunden werden, indem das eine Rohrende axial abragende Laschen mit Ausnehmungen hat, in die korrespondierende Rastelemente eingreifen, die auf einer Mantelfläche eines umlaufenden Bund des anderen Rohrendes vorliegen.

### Offenbarung der Erfindung

Eine Aufgabe der Erfindung ist es, eine leicht und zuverlässig montierbare Gelenkanordnung zu schaffen, die insbesondere für quasi-starre Rohrverbindungen geeignet ist. Die vorgenannten Aufgabe wird nach einem Erfindungsaspekt bei einer Gelenkanordnung gemäß Anspruch 1.

Günstige Ausgestaltungen und Vorteile der Erfindung ergeben sich aus den weiteren Ansprüchen, der Beschreibung und der Zeichnung.

Der Gelenkabschnitt, der in den anderen Gelenkabschnitt eingreift, wird auch als männlicher Gelenkabschnitt bezeichnet, der andere Gelenkabschnitt wird dagegen als weiblicher Gelenkabschnitt bezeichnet.

Im Gegensatz zum Stand der Technik ist keine separate Muffe oder Überwurfmutter zum Fixieren einer Verbindung zwischen den Gelenkabschnitten vorgesehen, da ein kugelförmiger Abschnitt am männlichen Gelenkabschnitt direkt aus dem Bauteil des Gelenkabschnitts gebildet wird und zum Fixieren der Verbindung zwischen den Gelenkabschnitten vorgesehen ist. Dadurch wird auch kein Endanschlag für den betreffenden Gelenkabschnitt benötigt. Der Einsatz aufwändiger und teurer Gummielemente zum Ausgleich von Bewegungen bei der Montage oder bei Temperaturwechsel im Betrieb kann vermieden werden.

Besonders geeignet ist die erfindungsgemäße Gelenkanordnung zur Herstellung einer starren oder quasi-starren Verbindung, etwa bei Ladeluftleitungen in Kraftfahrzeugen oder Verbindungen ohne dynamische Bewegungsbelastungen, insbesondere mit hohen Temperatur- und Druckbelastungen der Verbindung. Die Gelenkanordnung kann die beim Einbau oder durch leichte Lageveränderungen zwischen Anschlusspunkten entstehenden Bewegungen leicht ausgleichen. Dabei können sowohl Längenänderungen von wenigen Millimetern als auch Winkelfehler von wenigen Grad zwischen den Gelenkabschnitten ohne einseitige Spannungseinleitung in die Gelenkanordnung ausgeglichen werden.
Insbesondere können bei Vorsehen von zwei Gelenkabschnitten etwa in einer Rohrleitung Bewegungen zwischen Anschlusselementen bei starren Verbindungen mit nur geringen Abweichungen ausgeglichen werden. Relativbewegungen der Gelenkabschnitte zueinander, die bei der Montage zum Ausgleichen von Toleranzen notwendig sind, können ausgeführt werden, während im montierten Zustand die Verbindung starr und nicht zerstörungsfrei lösbar sein kann und allenfalls kleine, durch thermische Geometrieveränderungen hervorgerufene Bewegungen der Gelenkabschnitte zueinander zulässt.

Gemäß einer günstigen Ausgestaltung kann der Verriegelungskörper an seinem Außenumfang eine mit der Führungseinrichtung der Gelenkabschnitte korrespondierenden Abflachung oder Ausnehmung aufweisen. Vorteilhaft kann der Verriegelungskörper als Ring ausgebildet sein, insbesondere als Keilring. Durch die Abflachung oder Ausnehmung am Umfang kann der Verriegelungskörper an der Führungseinrichtung vorbeigleiten und gleichzeitig passend zu dieser orientiert werden. Somit können die beiden Gelenkabschnitte und der Verriegelungskörper in definierter Weise zueinander positioniert werden. Durch diese Ausgestaltung des Verriegelungskörpers kann eine geringe Rotierbarkeit der Gelenkabschnitte ermöglicht werden, die vorzugsweise zwischen 1° und 5°, besonders bevorzugt zwischen 2° und 3°, liegen kann. Die Führungseinrichtung kann dazu zweckmäßigerweise entsprechend angepasst sein.

Die Verriegelungskontur des einen Gelenkabschnitts umfasst eine Mehrzahl von Ausnehmungen an seiner Innenwand, die mit Verriegelungselementen des Verriegelungskörpers korrespondieren. Die Verriegelungselemente können mit den Ausnehmungen verrasten. Vorteilhaft können die Ausnehmungen auf gleicher axialer Höhe des Gelenkabschnitts ausgebildet sein. Besonders vorteilhaft bei der Ausgestaltung mit einer Mehrzahl von Ausnehmungen an der Innenwand ist, dass die Festigkeit eines solchen Gelenkteils gegenüber einem Gelenkabschnitt mit einer umlaufenden Nut verbessert ist. Je größer die Zahl der Ausnehmungen und der damit verrastbaren Verriegelungselemente, desto homogener ist die Krafteintragung in den Gelenkabschnitt. Ist die Zahl geringer, kann der Verriegelungskörper leichter mit seinen Verriegelungselementen gebogen werden, um mit der Verriegelungskontur zu verrasten.

Nach einer günstigen Ausgestaltung kann einer der beiden Gelenkabschnitte eine in axialer Richtung ragende Gabel mit Schenkeln aufweisen, zwischen denen ein radial abstehender Zapfen des anderen der beiden Gelenkabschnitte führbar ist, wobei Gabel und Zapfen Teil der Führungseinrichtung sind. Eine solche Konstruktion ist leicht herstellbar und erlaubt eine zuverlässige Führung. Ferner kann anhand des Zapfens nach hergestellter Verbindung der Gelenkabschnitte von außen ohne weiteres erkannt werden, ob die Gelenkabschnitte und der Verriegelungskörper korrekt positioniert sind und richtig zusammengefügt sind, obwohl nach Schließen der Kupplung der männliche Gelenkabschnitt sowie der Verriegelungskörper praktisch vollständig in den weiblichen Gelenkabschnitt eintauchen.

Vorteilhaft kann der Sperrabschnitt des Verriegelungskörpers und der Sperrabschnitt des Gelenkabschnitts, z.B. des männlichen Gelenkabschnitts, bei Kontakt einen Formschluss bilden. Hierdurch kann ein unerwünschtes Herausgleiten des männlichen Gelenkabschnitts aus dem weiblichen Gelenkabschnitt der Gelenkanordnung effektiv unterbunden werden.

Mit besonderem Vorteil kann der Verriegelungskörper als Keilring ausgebildet sein. Der Verriegelungskörper kann eine Auflagefläche für eine Stirnseite des z.B. weiblichen Gelenkabschnitts aufweisen und einen Bund, der zwischen die beiden Gelenkabschnitte eingreift und die Verriegelungselemente aufweist. Damit kann der Verriegelungskörper einfach und platzsparend montiert werden. Vorteilhaft kann die Sperrkontur an einer Innenseite des Keilrings angeordnet sein und die Haken zum Zusammenwirken mit der Verriegelungskontur an einer Außenseite des Keilrings. Beispielsweise können die Verriegelungselemente als Rasthaken ausgebildet sein, an deren radial innen angeordneten Flächen die Sperrkontur ausgebildet ist, z.B. in Form eines komplementär zur Sperrkontur des z.B. männlichen Gelenkabschnitts geformten Flächenbereichs. Denkbar ist jedoch auch eine invertierte Ausgestaltung mit Haken auf der Innenseite des Bunds des Verriegelungskörpers und einer Sperrkontur an der Außenseite, die jeweils mit entsprechenden Gegenelementen der Gelenkabschnitte zusammenwirken.

Vorteilhaft kann das männliche Gelenkstück an seiner Außenfläche eine Dichtungsnut aufweisen. Auf diese Weise kann eine druckdichte Verbindung sichergestellt werden. Zweckmäßigerweise kann der Verriegelungskörper zur bestimmungsgemäßen Montage im Durchmesser reversibel erweiterbar sein. Beispielsweise kann ein Schlitz im Verriegelungskörper vorgesehen sein. Dadurch kann der Verriegelungskörper bei der Montage einfach aufgeweitet werden, um ihn auf das entsprechende Gelenkteil aufzuschieben. Dabei weist der Sperrabschnitt des anderen, in den einen Gelenkabschnitt eingreifenden Gelenkabschnitts eine ballige Form zur Fixierung der beiden Gelenkabschnitte auf. Vorteilhaft kann dieser Gelenkabschnitt an seiner Außenfläche eine Dichtungsnut am Scheitel der balligen Form aufweisen.

Durch die wenigstens bereichsweise ballige Form kann eine kugelförmige Lagerung der Gelenkabschnitte erreicht werden, wodurch der Ausgleich von Winkelfehlern zwischen den Gelenkabschnitten besonders effektiv erleichtert wird. Die Verbindung zwischen den Gelenkabschnitten kann geschaffen werden, ohne dass das männliche Gelenkstück unter einem speziellen Winkel in das weibliche Gelenkstück eingesteckt und dann verriegelt werden muss, was die Montage vereinfacht. Günstigerweise kann der gelenkabschnittseitige Sperrabschnitt einen Bereich einer Außenfläche der balligen, stirnseitigen Verdickung des männlichen Gelenkabschnitts bilden. Dies ermöglicht eine sehr kompakte Anordnung ohne zusätzliche Bauelemente.

Alternativ ist auch denkbar, dass die Dichtungsnut an einer Position an der Innenseite des weiblichen Gelenkabschnitts angeordnet ist, welche dem Scheitel der balligen Form des männlichen Gelenkabschnitts entspricht.

Durch die Anordnung der Dichtungsnut und entsprechend der Dichtung im Scheitel der balligen Form kann günstigerweise erreicht werden, dass die elastische Spannung umlaufend gleichmäßig auf die beiden Gelenkabschnitte wirkt. Durch die Positionierung der Dichtungsnut am Scheitel der balligen Form bleibt die Dichtung bei einer Verdrehung der Gelenkabschnitte gegeneinander unverändert. Als Dichtung kann beispielsweise ein O-Ring eingesetzt werden.

Nach einer günstigen Ausführung kann der Verriegelungskörper einen Schlitz so aufweisen, dass der Verriegelungskörper im Durchmesser reversibel erweiterbar ist. Der Verriegelungskörper kann aufgeweitet und einfach über die ballige Stirnseite auf einen Bereich des männlichen Gelenkabschnitts mit kleinerem Durchmesser aufgeschoben werden. Bei der Herstellung der Verbindung zwischen den Gelenkabschnitten kann der Durchmesser des Verriegelungskörpers unverändert bleiben. Nur die Verriegelungselemente werden durch Gleiten entlang des männlichen Gelenkabschnitts nach außen in die Verriegelungskontur des entsprechenden Gelenkabschnitts bewegt, wo sie einrasten können. Insbesondere kann der Verriegelungskörper an der Verriegelungskontur des entsprechenden Gelenkabschnitts, z.B. des weiblichen Gelenkabschnitts verrastet sein und der z.B. männliche Gelenkabschnitt noch in Grenzen beweglich sein.

Die Gelenkanordnung eignet sich besonders zur Herstellung einer quasi-starren Verbindung von Rohren, insbesondere Ladeluftrohren in Fahrzeugen. Die Anordnung kann sowohl bei Überdruck als auch bei Unterdruck arbeiten.

Gemäß einem weiteren Aspekt der Erfindung wird eine Verbindungsrohrleitung mit einem Rohr und wenigstens einer fest mit dem Rohr verbundenen erfindungsgemäßen Gelenkanordnung vorgeschlagen. Die Gelenkanordnung kann an die Rohrleitung angeschweißt sein, wobei unterschiedliche Schweißverfahren eingesetzt werden können, oder die feste Verbindung kann auf andere geeignete Weise hergestellt werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Figur 1: ein Ausführungsbeispiel eines Ladeluftrohrs einer Brennkraftmaschine mit zwei Gelenkanordnungen gemäß einer Ausgestaltung der Erfindung;
- Figur 2: als Schnittdarstellung zwei Gelenkabschnitte und einen Verriegelungskörper einer Gelenkanordnung vor dem Zusammenführen der Teile gemäß einer Ausgestaltung der Erfindung;
- Figur 3: als Schnittdarstellung die Gelenkanordnung aus Figur 2 mit dem Verriegelungskörper, der auf den männlichen Gelenkabschnitt aufgeschoben ist, vor dem Festlegen des männlichen Gelenkabschnitts an dem weiblichen Gelenkabschnitt;
- Figur 4: als Schnittdarstellung die Gelenkanordnung aus Figur 2 nach dem Schließen der Gelenkanordnung, wobei der Verriegelungskörper an dem weiblichen Gelenkabschnitt verrastet ist;
- Figur 5: als Explosionsdarstellung den männlichen Gelenkabschnitt und den Verriegelungskörper aus Figur 2; und
- Figur 6: eine isometische Darstellung der geschlossenen Gelenkanordnung mit einer Führungseinrichtung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

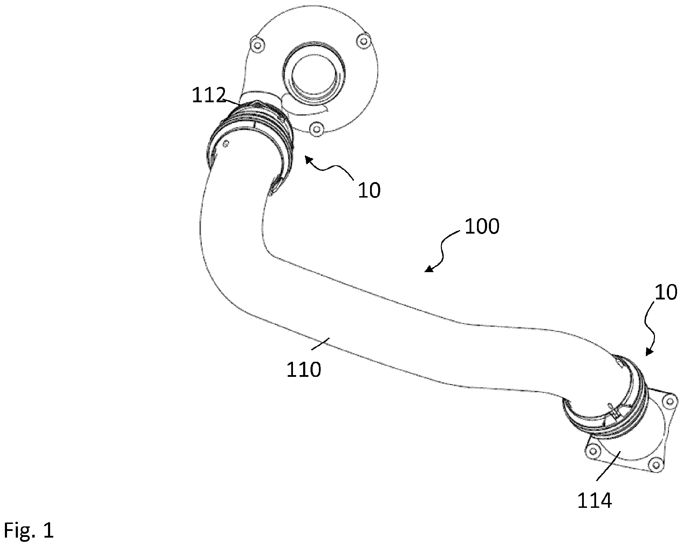

Zur Erläuterung der Erfindung zeigt Figur 1 ein Ausführungsbeispiel einer Verbindungsrohrleitung 100 mit zwei Gelenkanordnungen 10 gemäß einer Ausgestaltung der Erfindung. Die Verbindungsrohrleitung 100 in Form eines Ladeluftrohrs 110 einer Brennkraftmaschine ist an einem ersten Gelenkpunkt 112 über die erste Gelenkanordnung 10 an ein erstes Rohrstück angeschlossen und an einem entfernt angeordneten Gelenkpunkt 114 über die zweite Gelenkanordnung 10 an ein zweites Rohrstück angeschlossen. Die Verbindungsrohrleitung 100 ist bestimmungsgemäß quasi-starr, d.h. sie ist im Betrieb nicht für dynamische Bewegungen vorgesehen, sondern im Wesentlichen unbeweglich und lediglich langsamen Bewegungen zum thermischen Ausgleich ausgesetzt.

Die Gelenkanordnung 10 bildet jeweils eine Verbindung mit einer geringen Beweglichkeit zwischen zwei Rohren oder Rohrabschnitten. Die Gelenkanordnung 10 erlaubt einen Ausgleich geringer Bewegungen zwischen den Rohrenden sowohl von Kippbewegungen als auch von axialen Bewegungen. So kann die Gelenkanordnung 10 Verkippungen von bis zu 2,5° und einen Längenversatz zwischen den beiden Rohren von wenigen Millimetern, etwa +/-3mm, ausgleichen. Ebenso kann ein Achsversatz leicht ausgeglichen werden, wenn zwei Gelenkanordnungen 10 an der Verbindungsrohrleitung 100 vorgesehen sind. Die Bewegungsunterschiede werden dabei nicht dynamisch zwischen den beiden Endpunkten ausgeglichen, sondern das Gelenkelement 10 wirkt lediglich als Ausgleichselement für die Montage des Systems und zum Toleranzausgleich zwischen zwei Anschlusspunkten. Um die Vorteile der Gelenkanordnung 10 optimal nutzen zu können, empfiehlt es sich, die Gelenkanordnung 10 als Paar zu beiden Seiten der Ladeluftrohrverbindung 110 vorzusehen.

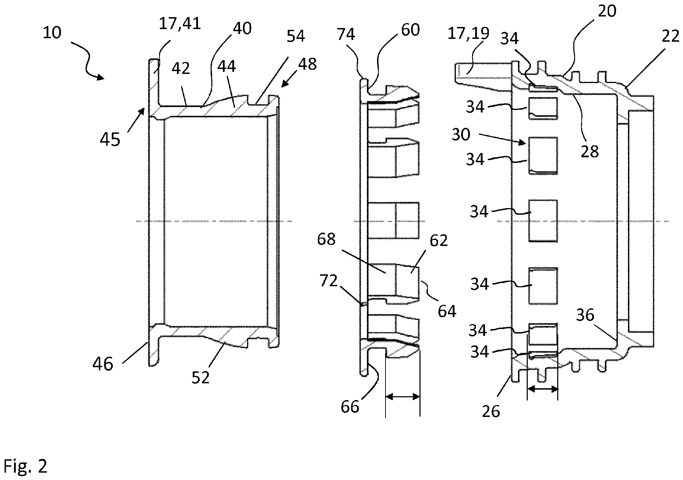

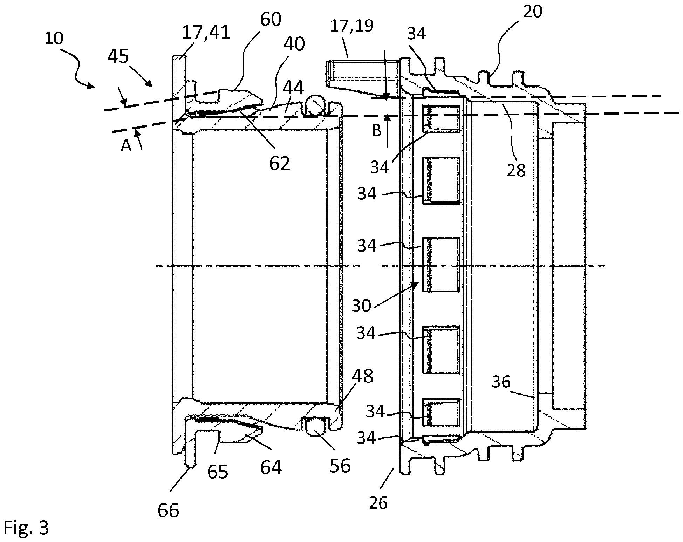

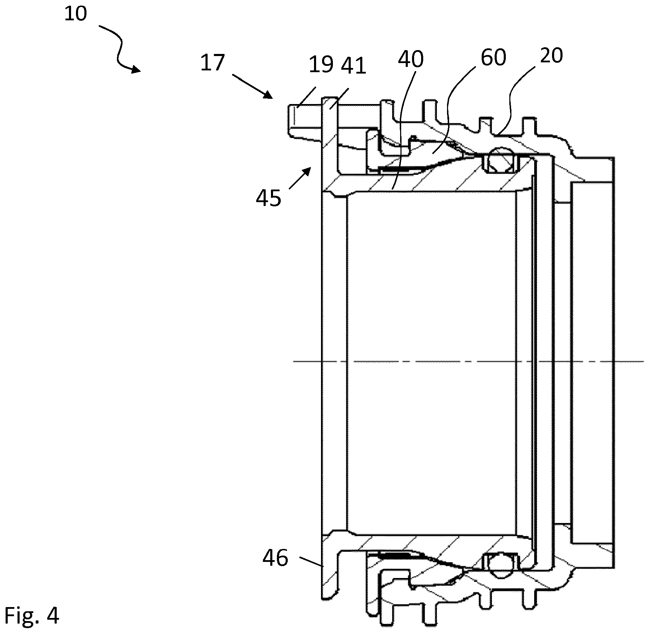

Die Figuren 2 bis 4 zeigen eine Gelenkanordnung 10 in Schnittdarstellung vor dem Zusammenführen von Gelenkabschnitten 20, 40 und Verriegelungskörper 60 (Figur 2), in einem Zwischenschritt mit aufgeschobenem Verriegelungskörper 60 (Figur 3) und in geschlossenem Zustand (Figur 4).

Als Material für Gelenkabschnitte 20, 40 und Verriegelungskörper 60 kann Kunststoff oder Metall eingesetzt werden. Als metallischer Werkstoff eignet sich beispielsweise Stahl oder Zink-Druckguss. Auch eine Kombination von metallischem Werkstoff und Kunststoff ist möglich. So kann etwa das männliche Gelenkstück 40 aus Metall und das weibliche Gelenkstück 20 aus Kunststoff sein.

Die Gelenkanordnung 10 umfasst den weiblichen Gelenkabschnitt 20 und den männlichen Gelenkabschnitt 40 sowie den Verriegelungskörper 60, der zwischen die Gelenkabschnitte 20, 40 eingreift und ein Auseinandergleiten der Gelenkabschnitte 20, 40 verhindert.

Der weibliche Gelenkabschnitt 20 bildet so eine Gelenkpfanne, der männliche Gelenkabschnitt 40 eine Gelenkkugel eines Kugelgelenks.

Gelenkpfanne und Gelenkkugel können grundsätzlich auch Teil eines anderen Bauteils sein, etwa eines Anschlussstutzens, eines Rohrelements oder dergleichen.

Im männlichen Gelenkabschnitt 40 ist im Bereich des stirnseitigen Endes 48 eine ballige Verdickung 44 vorgesehen. Im verdickten balligen Bereich ist im Scheitel eine Dichtungsnut 54 angeordnet, in die im montierten Zustand eine Dichtung 56, z.B. ein O-Ring, eingelegt ist. Die Dichtung 56 dient zur druckdichten Verbindung von Gelenckugel und Gelenkpfanne, d.h. des weiblichen und männlichen Gelenkabschnitts 20, 40.

Der weibliche Gelenkabschnitt 20 weist an seiner Innenseite 28 eine Verriegelungskontur 30 auf, die mit Verriegelungselementen 64 des Verriegelungskörpers 60, die insbesondere als Rastnasen ausgebildet sind, zusammenwirkt. Die Verriegelungskontur 30 umfasst eine Mehrzahl von Ausnehmungen 34 an der Innenseite 28, in welche die Verriegelungselemente 64 mit Nasen 65 eingreifen können. Den Nasen 65 gegenüberliegend ist an der Innenseite des Verriegelungskörpers 60 ein Sperrabschnitt 62 ausgebildet, der mit einem Sperrabschnitt 52 des anderen, männlichen Gelenkabschnitts 40 zusammenwirkt. Der Sperrabschnitt 62 ist korrespondierend zur balligen Form des Sperrabschnitts 52 des Gelenkabschnitts 40 ausgebildet.

Der Verriegelungskörper 60 ist als Ring, insbesondere als Keilring, ausgebildet, mit einem Auflagering 66 und axial sich erstreckenden Verriegelungselementen 64, insbesondere Rastnasen. Der Verriegelungskörper 60 verrastet im montierten Zustand an seiner Außenseite mit dem weiblichen Gelenkabschnitt 20 und wirkt an seiner Innenseite mit einem Sperrabschnitt des männlichen Gelenkabschnitts zusammen.

Eine invertierte Ausführung wäre grundsätzlich denkbar, bei welcher der Verriegelungskörper 60 am männlichen Gelenkteil 40 verrastet und mit einem Sperrabschnitt des weiblichen Gelenkteils 20 zusammenwirkt.

Der Auflagering 66 dient zum Auflegen auf eine Stirnseite 26 des weiblichen Gelenkabschnitts 20. Der Verriegelungskörper 60 dient sowohl zum Fixieren des männlichen Gelenkabschnitts 40 am weiblichen Gelenkabschnitt 20 als auch zum Begrenzen einer Relativbewegung des männlichen Gelenkabschnitts 40 gegenüber dem weiblichen Gelenkabschnitt 20 und verhindert so sicher ein Lösen der Verbindung zwischen den Gelenkabschnitten 20, 40.

Die Gelenkanordnung 10 weist ferner eine Führungseinrichtung 17 auf, mit der eine definierte rotatorische Positionierung der Gelenkabschnitte 20, 40 möglich wird. Der weibliche Gelenkabschnitt 20 weist dazu eine Gabel mit sich in axialer Richtung erstreckenden Schenkeln 19, 21 auf, zwischen die ein sich in radialer Richtung erstreckender Zapfen 41 des männlichen Gelenkteils 40 eingreift. Der Zapfen 41 ist im Bereich einer Ausnehmung 45 eines Endrings 46 des männlichen Gelenkabschnitts 40 angeordnet. Die Ausnehmung 45 ermöglicht bei der Montage ein Vorbeigleiten des männlichen Gelenkabschnitts 40 an der Gabel des weiblichen Gelenkabschnitts 20, wenn der Zapfen 41 zwischen den Schenkeln 19, 21 geführt ist. Die Ausnehmung 45 bildet dabei eine seitliche Begrenzung für die Gabel und damit eine Grenze für eine relative Verdrehung zwischen den Gelenkabschnitten 20, 40. Die Schenkel 19, 21 können abgeschrägte Außenkanten aufweisen und sich zum weiblichen Gelenkabschnitt 20 hin verbreitern, was die Führung des Gelenkabschnitts 40 zum Gelenkabschnitt 20 hin verbessert.

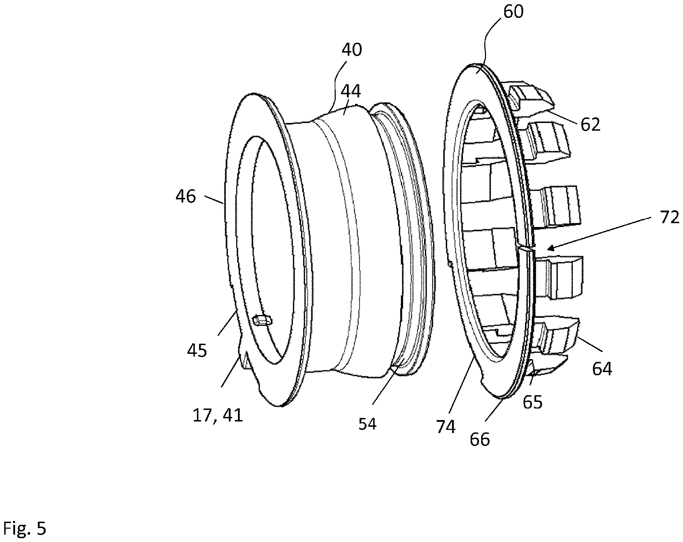

Der Verriegelungskörper 60 weist am Umfang des Auflagerings 66 eine Ausnehmung 74 auf, die im Bereich der Führungseinrichtung 17 positioniert wird. Der Auflagering 66 weist einen Durchmesser auf, der nur geringfügig kleiner ist als der Umfang an der Stirnseite 26 des weiblichen Gelenkabschnitts 26, so dass die Ausnehmung 74 erlaubt, dass der Verriegelungskörper 60 an den Schenkeln 19, 21 vorbeigleiten kann und gleichzeitig in einer rotatorischen Lage ist, die ein sicheres Einrasten der Verriegelungselemente 64 in die Ausnehmungen 34 der Verriegelungskontur 30 erlaubt, auch ohne dass diese von außen erkennbar sind. Die Details des männlichen Gelenkabschnitts 40 und des Verriegelungskörpers 60 sind in Figur 5 in einer Explosionsdarstellung erkennbar.

Wie der Abfolge der Figuren 2 bis 5 zu entnehmen ist, wird zur Montage der Gelenkanordnung 10 zunächst der Verriegelungskörper 60 auf den männlichen Gelenkabschnitt 40 aufgeschoben. Um den als Keilring ausgebildeten Verriegelungskörper 60 über die Verdickung 44 der Gelenkkugel schieben zu können, kann dieser aufgeweitet werden. Daher ist der Keilring an einer Stelle durch einen Schlitz 72 durchtrennt (Figur 2), so dass sich der Keilring öffnen und über die Verdickung 44 an der Gelenkkugel (männlicher Gelenkabschnitt 40) schieben lässt.

Dann wird die Dichtung 56 auf die Gelenkkugel (männlicher Gelenkabschnitt 40) montiert, anschließend wird die Gelenkkugel (männlicher Gelenkabschnitt 40) mit montierter Dichtung 56 mit der Stirnseite 48 voran in die Gelenkpfanne (weiblicher Gelenkabschnitt 20) gepresst. Dabei liegt der Keilring (Verriegelungskörper 60) außerhalb der Verdickung 44 auf der Gelenkkugel (männlicher Gelenkabschnitt 40).

Der Verriegelungskörper 60 (Keilring) wird ebenfalls in die Gelenkpfanne (weiblicher Gelenkabschnitt 20) gepresst. Dabei liegen die Rastnasen (Verriegelungselemente 64) des Keilrings (Verriegelungskörper 60) immer noch außerhalb der Verdickung 44 und können im Außendurchmesser zusammengepresst werden, bis sie unter der Verriegelungskontur 30 an der Gelenkpfanne (weiblicher Gelenkabschnitt 20) durchtauchen können. Die Dicke der Verriegelungselemente 64 ist dabei so bemessen, dass sie beim Zusammenführen der Gelenkabschnitte 20, 40 gerade noch durch den Spalt passen, der sich zwischen dem Eingangsdurchmesser des weiblichen Gelenkabschnitts 20 und dem Bereich der Gelenkkugel des männlichen Gelenkabschnitts 40 jenseits der Verdickung 44 ausbildet.

Der Verriegelungskörper 60 mit seinen federnden Verriegelungselementen 64 kann bei der Montage unter der Innenkontur der Verriegelungskontur 30 durchtauchen, wobei der Verriegelungskörpers 60 mit dem Sperrabschnitt 62 auf seiner Innenfläche bis auf die Außenfläche des männlichen Gelenkabschnitts 40 zusammengedrückt werden kann. In diesem zusammengepressten Zustand weist die Außenkante der Nasen 65 der Verriegelungselemente 64 einen geringeren Durchmesser auf als der Innendurchmesser der Verriegelungskontur 30.

Dies kann erreicht werden, indem die Spalthöhe zwischen der Innenkontur der Verriegelungskontur 30 des weiblichen Gelenkabschnitts 20 und dem zylindrischen Abschnitt 42 (s. Figur 2) der Außenkontur des männlichen Gelenkabschnitts 40 hinter der balligen Verdickung 44 (in Figur 3 als B bezeichnet) größer ist als der Abstand zwischen der Außenkante der Nase 65 des Verriegelungskörpers 60 und der Innenkontur mit dem Sperrabschnitt 62 des Verriegelungskörpers 60 (in Figur 3 als A bezeichnet). Nur wenn Abstand A kleiner oder gleich der Spalthöhe B ist, kann der Verriegelungskörper 60 in den Spalt zwischen den beiden Gelenkabschnitten 20, 40 eingepresst werden.

Die Gelenkkugel und der Keilring werden in axialer Richtung eingepresst, bis die Rastnasen (Verriegelungselemente 64) hinter den Ausnehmungen 34 der Verriegelungskontur 30 der Gelenkpfanne einrasten. Da der Außendurchmesser der Verriegelungselemente 64 größer ist als der Innendurchmesser der Verriegelungskontur 30, ist der Keilring (Verriegelungskörper 60) sicher am weiblichen Gelenkabschnitt 20 festgelegt und kann zerstörungsfrei nicht mehr entfernt werden. Bei einer Zugbelastung der Gelenkanordnung 10 wirkt der Keilring (Verriegelungskörper 60) wie eine formschlüssige Verbindung gegenüber der balligen Verdickung 44 an der Gelenkkugel und verhindert ein Öffnen der Gelenkanordnung 10. Dabei bilden der Sperrabschnitt 62 auf der Innenseite der Verriegelungselemente 64 des Verriegelungskörpers 60 und der Sperrabschnitt 52 der Gelenkkugel (männlicher Gelenkabschnitt 40) auf der balligen Verdickung 44 bei Kontakt den Formschluss, da sie in ihrer Form komplementär ausgebildet sind, z.B. der Sperrabschnitt 52 auf der Verdickung 44 konvex nach außen gewölbt (ballig) und der Sperrabschnitt 52 konkav nach innen gewölbt.

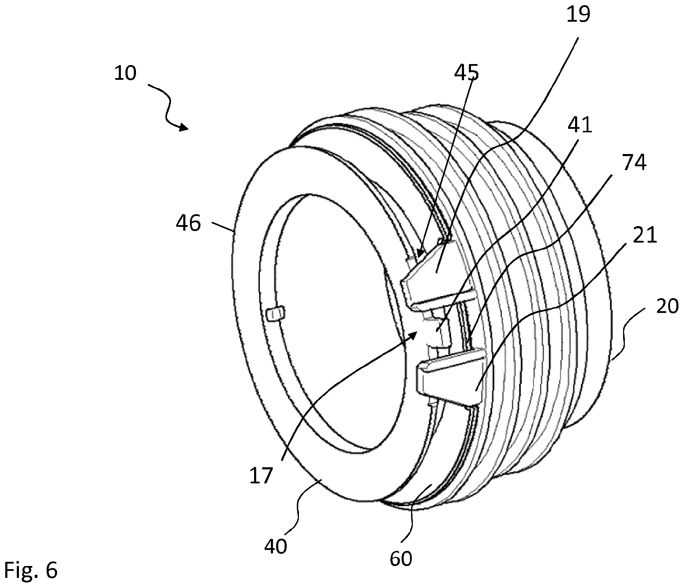

Figur 6 zeigt als isometrische Darstellung die Gelenkanordnung 10 aus Figur 2 mit geschlossener Kupplung nach Figur 4. Der Verriegelungskörper 60 taucht nahezu vollständig, bis auf den Anlagering 66, in den weiblichen Gelenkabschnitt 20 ein. Ebenso ist der männliche Gelenkabschnitt 40 weitgehend in den weiblichen Gelenkabschnitt 20 eingetaucht, wobei an der Position des radial herausragenden Zapfens 41 der Führungseinrichtung 17 am männlichen Gelenkabschnitt 40 erkennbar ist, ob die Komponenten richtig zueinander positioniert sind.

## Patentansprüche

1. Gelenkanordnung (10) für Rohrleitungen, umfassend zwei Gelenkabschnitte (20, 40), wobei einer der beiden Gelenkabschnitte (40) in den anderen der beiden Gelenkabschnitte (20) eingreift, sowie einen Verriegelungskörper (60), der wenigstens bereichsweise zwischen die Gelenkabschnitte (20, 40) eingreift und mit einer Verriegelungskontur (30) an einem der Gelenkabschnitte (20) und mit einem Sperrabschnitt (52) des anderen Gelenkabschnitts (40) so zusammenwirkt, dass eine Relativbewegung zwischen den Gelenkabschnitten (20, 40) zumindest begrenzbar ist und wobei an den Gelenkabschnitten (20, 40) eine Führungseinrichtung (17) so vorgesehen ist, dass die beiden Gelenkabschnitte (20, 40) in einer definierten rotatorischen Stellung zueinander zusammenfügbar sind, wobei die Verriegelungskontur (30) des einen Gelenkabschnitts (20) eine Mehrzahl von Ausnehmungen (34) an seiner Innenwand umfasst, die mit den Verriegelungselementen (64) des Verriegelungskörpers (60) korrespondieren, wobei der Sperrabschnitt (52) des anderen, in den einen Gelenkabschnitt (20) eingreifenden Gelenkabschnitts (40) eine ballige Form aufweist.

2. Gelenkanordnung nach Anspruch 1, wobei die Ausnehmungen (34) auf gleicher axialer Höhe des Gelenkabschnitts (20) ausgebildet sind.

3. Gelenkanordnung nach einem der vorhergehenden Ansprüche, wobei der Verriegelungskörper (60) an seinem Außenumfang eine mit der Führungseinrichtung (17) der Gelenkabschnitte (20, 40) korrespondierenden Abflachung (74) aufweist.

4. Gelenkanordnung nach einem der vorhergehenden Ansprüche, wobei einer der beiden Gelenkabschnitte (20) eine in axialer Richtung ragende Gabel mit Schenkeln (19, 21) aufweist, zwischen denen ein radial abstehender Zapfen (41) des anderen der beiden Gelenkabschnitte (40) führbar ist, wobei Gabel und Zapfen (41) Teil der Führungseinrichtung (17) sind.

5. Gelenkanordnung nach einem der vorhergehenden Ansprüche, wobei der Sperrabschnitt (62) des Verriegelungskörpers (60) und der Sperrabschnitt (52) des anderen Gelenkabschnitts (40) bei Kontakt einen Formschluss bilden.

6. Gelenkanordnung nach Anspruch 1, wobei der andere Gelenkabschnitt (40) an seiner Außenfläche eine Dichtungsnut (54) am Scheitel der balligen Form aufweist.

7. Gelenkanordnung nach einem der vorhergehenden Ansprüche, wobei der Verriegelungskörper (60) einen Schlitz (72) so aufweist, dass der Verriegelungskörper (60) im Durchmesser reversibel erweiterbar ist.

8. Verwendung der Gelenkanordnung (10) nach einem der vorhergehenden Ansprüche zur Herstellung einer quasi-starren Verbindung von Gasrohren, insbesondere Ladeluftrohren (110).

9. Verbindungsrohrleitung (100) mit einem Rohr und wenigstens einer fest mit dem Rohr verbundenen Gelenkanordnung (10) nach einem der Ansprüche 1 bis 7.

## Claims

1. Joint mechanism (10) for piping, comprising two joint portions (20, 40), wherein one of the two joint portions (40) engages into the other of the two joint portions (20), as well as a locking body (60) which engages at least in some areas between the joint portions (20, 40) and interacts with a locking contour (30) on one of the joint portions (20) and with a locking portion (52) of the other joint portion (40) in such a way that a relative movement between the joint portions (20, 40) can at least be limited and wherein a guiding device (17) is provided on the joint portions (20, 40) in such a way that the two joint portions (20, 40) are connectable to each other in a defined rotatory position, wherein the locking contour (30) of the one joint portion (20) comprises a plurality of recesses (34) on its internal wall which correspond with the locking elements (64) of the locking body (60), wherein the locking portion (52) of the other joint mechanism (40) engaging in the joint portion (20) features a spherical shape.

2. Joint mechanism according to claim 1, wherein the recesses (34) are realized at the same axial height of the joint portion (20).

3. Joint mechanism according to one of the preceding claims, wherein the locking body (60) features on its outer periphery a flattening (74) corresponding with the guiding device (17) of the joint portions (20, 40).

4. Joint mechanism according to one of the preceding claims, wherein one of the two joint portions (20) features a fork projecting in axial direction with legs (19, 21) between which a radially projecting tenon (41) of the other of the two joint portions (40) can be guided, wherein fork and tenon (41) are part of the guiding device (17).

5. Joint mechanism according to one of the preceding claims, wherein the locking portion (62) of the locking body (60) and the locking portion (52) of the other joint portion (40) create a positive engagement during contact

6. Joint mechanism according to claim 1, wherein the other joint portion (40) features on its outer surface a seal groove (54) on top of the spherical shape.

7. Joint mechanism according to one of the preceding claims, wherein the locking body (60) features a slit (72) in such a way that the locking body (60) is reversibly expandable in diameter.

8. Use of the joint mechanism (10) according to one of the preceding claims for manufacturing a quasi-rigid connection of gas pipes, in particular charge-air pipes (110).

9. Connecting conduit (100) with a pipe and at least one joint mechanism (10) firmly connected to the pipe according to one of the claims 1 to 7.

## Revendications

1. Ensemble d'articulation (10) pour tuyauterie, comprenant deux sections articulées (20, 40), dans lequel l'une des deux sections articulées (40) s'engrène dans l'autre des deux sections articulées (20), ainsi qu'un corps de verrouillage (60) qui s'engrène, au moins dans certaines sections, entre les sections articulées (20, 40) et qui coopère avec un contour de verrouillage (30) sur l'une des sections articulées (20) et avec une section de blocage (52) de l'autre section articulée (40) de sorte qu'un mouvement relatif entre les sections articulées (20, 40) peut au moins être limité et dans lequel un dispositif de guidage (17) est prévu au niveau des sections articulées (20, 40) de sorte que les deux sections articulées (20, 40) peuvent être assemblées dans une position de rotation définie l'une par rapport à l'autre, dans lequel le contour de verrouillage (30) de l'une des sections articulées (20) comprend une pluralité d'évidements (34) sur sa paroi interne qui correspondent avec les éléments de verrouillage (64) du corps de verrouillage (60), dans lequel la section de blocage (52) de l'autre section articulée (40) s'engrenant dans la section articulée (20) présente une forme bombée.

2. Ensemble d'articulation selon la revendication 1, dans lequel les évidements (34) sont réalisées à la même hauteur axiale de la section articulée (20).

3. Ensemble d'articulation selon l'une des revendications précédentes, dans lequel le corps de verrouillage (60) présente sur sa circonférence extérieure un méplat (74) correspondant au dispositif de guidage (17) des sections articulées (20, 40).

4. Ensemble d'articulation selon l'une des revendications précédentes, dans lequel l'une des deux sections articulées (20) présente une fourchette faisant saillie en sens axial avec branches (19, 21), entre lesquelles un pivot (41) faisant saillie radialement de l'autre des deux sections articulées (40) peut être guidé, dans lequel la fourchette et le pivot (41) font partie du dispositif de guidage (17).

5. Ensemble d'articulation selon l'une des revendications précédentes, dans lequel la section de blocage (62) du corps de verrouillage (60) et la section de blocage (52) de l'autre section articulée (40) réalisent un engagement positif lors d'un contact.

6. Ensemble d'articulation selon la revendication 1, dans lequel l'autre section articulée (40) présente une rainure d'étanchéité (54) sur sa surface extérieure sur le sommet de la forme bombée.

7. Ensemble d'articulation selon l'une des revendications précédentes, dans lequel le corps de verrouillage (60) présente une fente (72) de sorte que le corps de verrouillage (60) est réversiblement extensible en diamètre.

8. Utilisation de l'ensemble d'articulation (10) selon l'une des revendications pour réaliser un raccordement quasi rigide de tubes à gaz, en particulier tubes pour air de suralimentation (110).

9. Conduite tubulaire de raccordement (100) avec un tube et au moins un ensemble d'articulation (10) connecté de manière fixe au tube selon l'une des revendications 1 à 7.
